# EUROPÄISCHE PATENTSCHRIFT

(11) **EP 4 137 462 B1**
(45) Veröffentlichungstag und Bekanntmachung des Hinweises auf die Patenterteilung: **25.11.2026**
(21) Anmeldenummer: 22201326.0
(22) Anmeldetag: 11.03.2020
(51) Int. Cl.: C02F 1/42, B01J 39/14, B01J 47/016, B01J 47/022, B01J 49/06, B01J 49/53, B01J 49/85, C02F 1/20, C02F 1/78, C02F 1/467, C02F 103/42

(54) **ENTHÄRTEN VON TRINKWASSER**
SOFTENING DRINKING WATER
ADOUCISSEMENT D'EAU POTABLE

(30) Priorität: 12.03.2019 DE 102019106304
(43) Veröffentlichungstag der Anmeldung: 22.02.2023
(62) Dokumentnummer(n) der früheren Anmeldung(en) nach Art. 76 EPÜ: 20711847.2 / 3 938 320
(73) Patentinhaber: BWT Holding GmbH, 5310 Mondsee (AT)
(72) Erfinder: Johann, Jürgen, 5310 Mondsee (AT); Schmidt, Thomas, 68519 Viernheim (DE)
(74) Vertreter: Friderichs, Gunther

(56) Entgegenhaltungen:
- EP-A1- 2 924 011
- WO-A1-2010/139471
- DE-A1- 102014 216 499
- GB-A- 493 539
- US-A- 4 613 578
- US-A1- 2014 138 321
- LILLI GREEN: "Die Spar-Spülmaschine mit Zeolith-Kugeln", 19 January 2011 (2011-01-19), XP055761456, Retrieved from the Internet <URL:https://www.lilligreen.de/die-spar-spulmaschine-mit-zeolith-kugeln/> [retrieved on 20201218]

## Beschreibung

### Gebiet der Erfindung

Die Erfindung betrifft die Verwendung einer Kartusche oder Filterkerze zur Wasserenthärtung.

### Hintergrund der Erfindung

Wässer enthalten Calcium- und Magnesiumionen, die sogenannten Härtebildner. Diese Härtebildner neigen bei Temperaturerhöhung und/oder bei pH-Werterhöhung zum Ausfall. Hierbei bildet sich Wasserstein (Kalk bzw. Magnesiumkalk):

Ca²⁺ + 2 HCO₃⁻ → CaCO₃ + CO₂ + H₂O

Mg²⁺ + 2 HCO₃⁻ → MgCO₃ + CO₂ + H₂O

So bilden sich störende Kalkkrusten, die unter Verwendung von Reinigungsmitteln entfernt werden müssen. Die betrifft insbesondere auch Schwimmbäder.

Durch die Wassersteinbildung kann es zu Schäden an technischen Apparaten (z.B. Wärmetauschern, Trinkwassererwärmern, Heizungsanlage) kommen. Außerdem führt eine zunehmende Steinbildung zu einer Verschlechterung der Wärmeübertragung und somit zu einer Verringerung der Energieausbeute. Hartes Wasser führt auch zu einem Mehrverbrauch an Seifen und Waschmitteln, da sich zuerst unlösliche Calcium- und Magnesiumsalze bilden, bevor die Seifen bzw. Waschmitteln ihre Wirkung entfalten können.

Aus diesem Grunde werden viele Wässer enthärtet. Hierfür werden in der Praxis meist organische Ionenaustauscher verwendet. Der Ionenaustauscher tauscht die im Wasser befindlichen Calcium- und Magnesiumionen gegen die auf dem Ionenaustauscher befindlichen Natriumionen aus.

2 R_{Org}Na + Ca²⁺ → R_{Org 2}Ca + 2 Na⁺

Die zurzeit zum Einsatz kommenden Ionenaustauscher besitzen eine organische Matrix (z. B. vernetztes Polystyrol). Die organische Matrix hat den Nachteil, dass Organik in das Wasser migrieren kann und das Wasser verunreinigt wird. Weiterhin kann sich durch die mechanische Beanspruchung des Ionenaustauschermaterials beim Durchfließen von Wasser Mikroplastik bilden, das schädlich auf die Umwelt und die menschliche Gesundheit wirkt. Außerdem siedeln sich dort gerne Mikroorganismen an, die die Organik verstoffwechseln. Dadurch kann das aufbereitete Wasser verkeimen.

Zur Desinfektion der Ionenaustauscher verwendet man oxidativ wirkende Desinfektionsmittel (zum Beispiel Natriumhypochlorit, unterchlorige Säure, aktives Chlor, z.B. erzeugt aus Natriumchlorid durch Elektrolyse). Das Chlor reagiert allerdings zu einem gewissen Teil mit der organischen Matrix des Ionenaustauschers, wird somit abgebaut und steht nicht mehr zur Desinfektion zur Verfügung. Außerdem entstehen Desinfektionsnebenprodukte (gebundenes Chlor), die das Abwasser verunreinigen aber auch am Ionenaustauscher adsorbieren können und später, wenn der Ionenaustauscher im Betriebsmodus ist, desorbieren können und das aufbereitete Wasser verunreinigen können.

In manchen Teilen der Welt ist es üblich, das Trinkwasser zu Desinfektionszwecken zu chloren (z.B. in den USA, Italien, Frankreich, aber auch in manchen Gegenden in Deutschland). Werden die organischen Ionenaustauscher in gechlortem Trinkwasser eingesetzt, reagiert auch in diesem Fall das Chlor mit der organischen Matrix des Ionenaustauschers, wird abgebaut und steht nicht mehr zur Aufrechterhaltung der Desinfektionskapazität zur Verfügung. Die dabei entstehenden Desinfektionsnebenprodukte, die gesundheitsschädlich sein können, verunreinigen unmittelbar das Trinkwasser.

Des Weiteren gibt es Wasserkocher mit integrierten Filterkartuschen, die mit organischen Ionenaustauschern gefüllt sind, damit das dem Wasserkocher zugeführte Wasser enthärtet wird. Beim Kochvorgang kommt der organische Ionenaustauscher mit dem aufsteigenden Dampf in Kontakt, wodurch sich der Ionenaustauscher teilweise zersetzt. Die Zersetzungsprodukte treten in das Kondensat über und abtropfendes Kondenswasser verunreinigt das Heißwasser.

Zeolithe als Ionenaustauscher sind aus folgenden Dokumenten bekannt:
- US 2014/138321 A1
- WO 2010/139471 A1
- GB 493 539 A
- US 4 613 578 A
- EP 2 924 011 A1
- DE 10 2014 216499 A1
- Lilli Green, "Die Spar-Spülmaschine mit Zeolith-Kugeln", (20110119), URL: https://www.lilligreen.de/die-spar- spulmaschine-mitzeolith-kugeln/, (20201218)

### Aufgabe der Erfindung

Der Erfindung liegt demgegenüber die Aufgabe zugrunde, die genannten Nachteile des Standes der Technik zumindest zu reduzieren.

Es ist insbesondere eine Aufgabe der Erfindung, ein Verfahren zur Enthärtung von Trinkwasser bereitzustellen, bei welchem auf organische Ionenaustauscher verzichtet werden kann und/oder bei welchem nicht oder nur in geringem Maße verwendetes Chlor abgebaut wird.

### Zusammenfassung der Erfindung

Die Aufgabe der Erfindung wird bereits durch die Verwendung einer Kartusche oder Filterkerze mit den Merkmalen des Anspruchs 1 gelöst.

Bevorzugte Ausführungsformen und Weiterbildungen der Erfindung sind dem Gegenstand der abhängigen Ansprüche, der Beschreibung sowie den Zeichnungen zu entnehmen.

Zur Enthärtung von Trinkwasser wird ein Tischwasserfilter, eine Filterkartusche und/oder eine Enthärtungsanlage verwendet.

Tischwasserfilter umfassen eine Kanne mit einem Trichter, in welchem eine Filterkartusche sitzt, die mit einem Ionenaustauschermaterial befüllt ist.

Das in den Trichter gefüllte Wasser durchläuft in der Regel allein schwerkraftbetrieben die Filterkartusche und sammelt sich in der Kanne. Die für einen Tischwasserfilter verwendeten Filterkartuschen werden in der Regel nicht regeneriert, sondern nach deren Erschöpfung entsorgt.

Enthärtungsanlagen werden vor allem zur Trinkwasserversorgung von Wohnungen verwendet. Diese sind in der Regel inline in eine Wasserzuleitung eingebaut. Das in der Enthärtungsanlage vorhandene Ionenaustauschermaterial wird zumeist automatisch regeneriert.

Weiter gibt es Enthärtungsanlagen, die als Untertischwasserfilter für einen Wasserhahn oder als Filterkartusche für eine Anlage zur Erzeugung von Getränken (z.B. Wasserspender, Kaffeemaschine) ausgebildet sind. Enthärtungsanlagen für eine Heizung können auch eine Filterkerze oder Kartusche mit einem Ionenaustauschermaterial umfassen, über welche, das zur Befüllung der Heizungsanlage verwendete Wasser geleitet wird.

Das Trinkwasser wird über ein Molekularsieb geleitet.

Molekularsiebe sind poröse, anorganische Materialien, die zur Klasse der Aluminosilikate gehören. Molekularsiebe werden nach dem Stand der Technik hauptsächlich zur Aufbereitung von Gasen eingesetzt (z.B. zur Trocknung, zur Entfernung von Schwefelwasserstoff, Carbonylsulfiden, Mercaptanen, Kohlenstoffdioxid, Stickstoff, Kohlenwasserstoffen).

Es hat sich gezeigt, dass, wenn Molekularsiebe mit einer wässrigen Salz-, insbesondere Natriumchlorid-Lösung, vorbehandelt werden, diese danach in der Lage sind, aus einem Wasserstrom die dort gelösten Calcium- und Magnesiumionen aufzunehmen und gegen Natriumionen auszutauschen.

Das Molekularsieb fungiert als anorganischer Ionenaustauscher, dabei verarmt das Wasser an Calcium und Magnesium und gleichzeitig wird es mit Natrium angereichert.

2 R_{Anorg}Na + Ca²⁺ → R_{Anorg 2}Ca + 2 Na⁺

Analog ist ein Austausch der im Wasser gelösten Calcium- und Magnesiumionen gegen andere Kationen möglich, wenn das Molekularsieb mit einer wässrigen Salzlösung des entsprechenden Kations vorbehandelt wurde. Zum Beispiel ein Austausch gegen Kaliumionen bei einer Vorbehandlung mit einer wässrigen Kaliumsalzlösung (z.B. Kaliumchlorid) oder ein Austausch gegen Zinkionen bei einer Vorbehandlung mit einer wässrigen Zinksalzlösung (z.B. Zinkchlorid). Auch ein Austausch der im Wasser gelösten Calciumionen gegen Magnesiumionen bei einer Vorbehandlung des Molekularsiebs mit einer wässrigen Magnesiumsalzlösung (z.B. Magnesiumchlorid) ist möglich.

2 R_{Anorg}K + Ca²⁺ → R_{Anorg 2}Ca + 2 K⁺

R_{Anorg 2}Zn + Ca²⁺ → R_{Anorg 2}Ca + Zn²⁺

R_{Anorg 2}Mg + Ca²⁺ → R_{Anorg 2}Ca + Mg²⁺

Es hat sich herausgestellt, dass Molekularsiebe, insbesondere Zeolithe, eine hinreichende Kapazität zur Wasserenthärtung aufweisen und wie organische Ionenaustauscher ebenfalls mit einer Kochsalzlösung regeneriert werden können.

Zeolithe umfassen aber keine organischen Bestandteile und reagieren nicht mit zur Desinfektion verwendeten Substanzen wie Chlor.

Insbesondere kann als Molekularsieb ein Zeolith A und/oder Zeolith X verwendet werden.

Das Verfahren eignet sind insbesondere für Chlor-haltiges Wasser, insbesondere Wasser mit einem Gesamtchlorgehalt von mindestens 0,05 mg/l.

Vorzugweise wird ein Molekularsieb mit einer mittleren Porengröße von über 2 Ångström, bevorzugt über 3 Ångström und/oder unter 15 Ångström, bevorzugt unter 8 Ångström verwendet.

Insbesondere wird als Molekularsieb ein Granulat verwendet. Das Granulat hat vorzugsweise eine mittlere Korngröße zwischen 0,2 mm und 5 mm.

Es hat sich herausgestellt, dass bei Verwendung derartiger Materialien eine für einen Zeolith hohe Kapazität erreicht werden kann.

Vorzugsweise wird ein Tischwasserfilter, eine Filterkartusche, und/oder eine Enthärtungsanlage verwendet, welche keinen organischen Ionenaustauscher umfasst.

Durch das erfindungsgemäße Verfahren kann die Gesamthärte des Trinkwassers allein durch das Leiten über das Molekularsieb um mindestens 2 °dH, bevorzugt um mindestens 10 °dH verringert werden.

Gemäß der Erfindung wird der Tischwasserfilter, die Filterkartusche und/oder die Enthärtungsanlage mit einem Zeolithgranulat ausgeliefert, dem, bezogen auf den Feststoffgehalt, mindestens 10 Gewichts% Wasser zugegeben wurde.

100 g Zeolithgranulat werden also mindestens 10 g Wasser zugesetzt. So kann bereits durch Zugabe einer derart geringen Wassermenge die Hitzeentwicklung aufgrund der Hydrationsenergie beim erstmaligen Verwenden des Granulats derart reduziert werden, dass es nicht zu einer störenden Wärmeentwicklung kommt.

Vorzugsweise werden dem Zeolithgranulat aber weniger als 25 Gewichts%, bevorzugt weniger als 20 Gewichts% Wasser zugegeben.

So ist das Granulat noch nicht derart nass, dass Wasser beim Transport austritt.

Das Granulat kann beispielsweise mit Wasser berieselt und optional auf den gewünschten Restfeuchtegehalt getrocknet werden.

Beschrieben wird eine Vorrichtung, zur Durchführung des vorstehend beschriebenen Verfahrens. Diese ist insbesondere als Tischwasserfilter, Filterkartusche oder Untertischfilter mit einer Kartusche oder Filterkerze ausgebildet. Weiter kann die Vorrichtung als Enthärtungsanlage ausgebildet sein, in welcher das Molekularsieb automatisch durch Durchleiten einer Salzlösung, insbesondere einer Natriumchloridlösung, regeneriert wird.

Die Erfindung betrifft die Verwendung einer Kartusche oder Filterkerze, welche mit einem Zeolithgranulat befüllt ist und welche zur Verwendung in einer vorstehend beschriebenen Vorrichtung, insbesondere einem Tischwasserfilter oder einer Untertischenthärtungsanlage, ausgebildet ist.

Vorzugsweise ist die Kartusche oder Filterkerze zu zumindest 30 %, vorzugsweise zu zumindest 60 % Ihres Volumens mit dem Zeolithgranulat befüllt.

Um die Hitzeentwicklung bei erstmaliger Verwendung zu reduzieren, ist gemäß der Erfindung dem Zeolithgranulat im Auslieferungszustand, bezogen auf den Feststoffgehalt mindestens 10 Gewichts% Wasser zugegeben sein, vorzugsweise aber weniger als 20 Gewichts %.

Die Kartusche oder Filterkerze kann sich im Auslieferungszustand insbesondere in einer Aufreißverpackung befinden. Die Menge des dem Zeolithgranulat zugesetzten Wassers ist aber so gering, dass nach Entnahme aus der Aufreißverpackung kein Wasser austritt.

Vorzugsweise hat die Kartusche oder Filterkerze ein Innenvolumen zwischen 50 und 2000 ml.

Die Kartusche oder Filterkerze ist vorzugsweise frei von organischen Ionenaustauschern, insbesondere ist das Zeolithgranulat mit keinem weiteren Feststoff vermischt.

So kann ein für ein Recycling gut geeignetes sortenreines Material vorhanden sein.

Vorteilhaft wäre daher ein Ionenaustauscher der aus einer anorganischen Matrix besteht. Dadurch könnte das Wasser nicht mit Organik verunreinigt werden und die Desinfektion wäre einfacher.

Es wurde nun festgestellt, dass auch sogenannte Molekularsiebe zur Wasserenthärtung eingesetzt werden können und dabei als Ionenaustauscher fungieren.

Das beschriebene Verfahren eignet sich zur Enthärtung grundsätzlich beliebiger Wässer. Es kann insbesondere bei Trinkwässern angewendet werden.

### Beschreibung von Ausführungsbeispielen:

### Ausführungsbeispiel 1:

Ein Molekularsieb (Zeolith A) wird mit einer wässrigen Natriumchlorid-Lösung regeneriert und dabei in die Natrium-Form überführt. Das Molekularsieb wird mit Wasser gespült und steht anschließend für den Betrieb zur Verfügung. Im Betriebsmodus wird Wasser über das Molekularsieb geleitet und man erhält ein an Calcium und Magnesium verarmtes (enthärtetes) und mit Natrium angereichertes Wasser. Nach einer gewissen Betriebszeit ist die Austauschkapazität des Molekularsiebs erschöpft. Es kann dann wieder mit einer wässrigen Natriumchlorid-Lösung regeneriert werden und steht anschließend wieder für den Betriebsmodus bereit.

Es handelt sich um einen reversiblen Prozess: Betriebsmodus Enthärtung:

2 R_{Anorg}Na + Ca²⁺ → R_{Anorg 2}Ca + 2 Na⁺

### Regeneration:

R_{Anorg 2}Ca + 2 Na⁺ → 2 R_{Anorg}Na + Ca²⁺

Anstelle einer Regeneration mit Natriumchlorid kann auch Kaliumchlorid oder ein anderes Salz verwendet werden. Der Ionenaustausch findet dann gegen das Kation dieses Salzes statt, z.B. Kalium.

### Ausführungsbeispiel 2:

50 ml Molekularsieb werden in eine Säule gefüllt und mit 1000 ml vollentsalztem Wasser gewaschen. Zur Regeneration werden danach 65 ml Natriumchlorid-Lösung (c=60 g/l) über das Molekularsieb geleitet und dann mit 500 ml vollentsalztem Wasser nachgewaschen. Anschließend wir calcium- und magnesiumhaltiges Wasser (Prüfwasser) über das Molekularsieb geleitet. Dieses Wasser hat eine Calciumkonzentration von 155 mg/l und eine Magnesiumkonzentration von 26 mg/l. Daraus ergibt sich für das Prüfwasser eine Gesamthärte von 27,6 ° dH (deutsche Härte). Im Ablauf der Säule wird abhängig von der durchflossenen Prüfwassermenge die Härte gemessen (Lauf 1). Anschließend wird das Molekularsieb wieder mit der vorgenannten Natriumchlorid-Lösung regeneriert und die Beladung mit vorgenanntem Prüfwasser wiederholt. Es wird wieder die Gesamthärte im Ablauf der Säule bestimmt (Lauf 2).

### Kurzbeschreibung der Zeichnungen

Fig. 1 ist eine schematische Ansicht einer Anlage zur Enthärtung eines Schwimm- und Badebeckenwassers.
Fig. 2 ist eine perspektivische Ansicht eines Tischwasserfilters.
Fig. 3 ist eine Schnittansicht der in dem Tischwasserfilter verwendeten Filterkartusche.
Fig. 4 zeigt eine Filterkerze.
Fig. 5 ist ein Diagramm, in welchem die Gesamthärte des Ablaufs aus der molekularsiebenthaltenden Säule gemäß vorstehendem Ausführungsbespiel 2 aufgetragen ist.
Fig. 7 bis Fig. 8 sind schematische Darstellungen einer optional vorhandenen Desinfektion des Molekularsiebs in verschiedenen Ausführungsformen.
Fig. 9 zeigt eine gegenüber Fig. 1 um eine Chlorung ergänzte Ausführungsform.

### Detaillierte Beschreibung der Zeichnungen

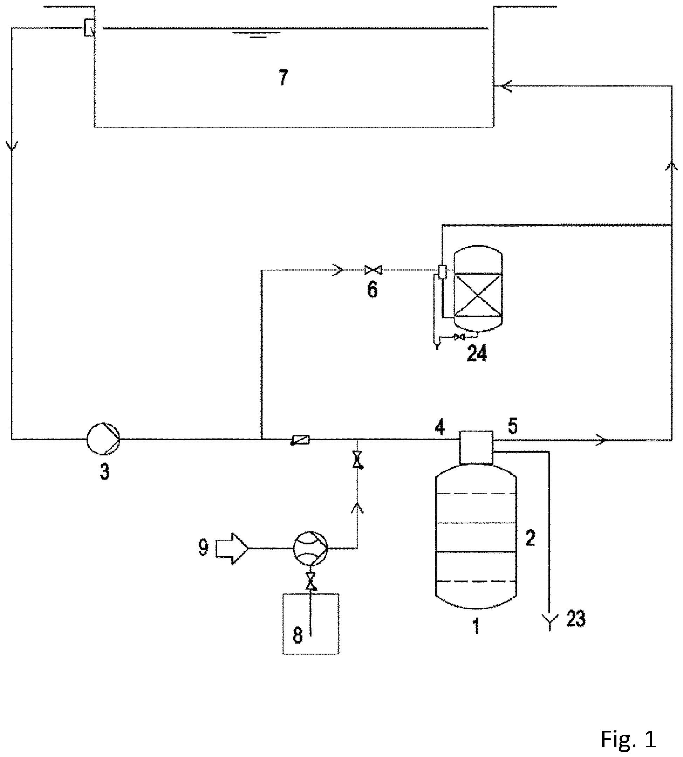

Fig. 1 ist eine schematische Ansicht eines Schwimm- und Badewasserbeckens 7, welches mit einer Enthärtungsanlage 1 versehen ist.

Die Enthärtungsanlage 1 umfasst eine Pumpe 3 sowie einen Behälter 2, welcher mit einem Zeolithgranulat (nicht dargestellt) befüllt ist.

Über Wasserleitungen ist die Enthärtungsanlage mit einem Einlauf 4 verbunden, über den Wasser aus dem Schwimmbecken 7 mittels der Pumpe 3 durch den Behälter 2 gepumpt wird.

Das in der Enthärtungsanlage 1 enthärtete Wasser wird über den Auslauf 5 zurück in das Schwimmbecken 7 geführt.

Die Enthärtungsanlage 1 wird mithin im Umwälzbetrieb betrieben.

Dies hat den Vorteil, dass das Schwimmbecken 7 zunächst mit Wasser befüllt werden kann, und zwar mit einem Volumenstrom, auf den die Enthärtungslage 1 nicht ausgelegt ist.

Sodann wird über die Enthärtungsanlage 1 das Wasser enthärtet.

Aufgrund der Verwendung eines Zeolith als Ionenaustauscher wird das im Schwimmbecken 7 verwendete Chlor nicht abgebaut.

Die Anlage 1 kann einen Bypass 6 umfassen, über den ein Teil des Wassers nicht enthärtet wird, sondern in das Schwimmbecken 7 zurückgeführt wird. So kann die Enthärtungsanlage kleiner als für den vollen Umwälzvolumenstrom dimensioniert werden.

Zur Regeneration des Zeolith im Behälter 2 wird Speisewasser 9 mit Salz aus einem Salzlösebehälter 8 in Intervallen über den Zeolith geleitet.

Der Zeolith wird so durch den Austausch gegen Natriumionen regeneriert. Die zur Regeneration verwendende Salzlösung wird sodann über einen Ablauf 23 der Kanalisation zugeführt.

Die Abstände zwischen den Intervallen, bezogen auf das Volumen des durch den Behälter 2 geleiteten Wasser, können mit zunehmender Enthärtung des Wassers im Schwimmbecken 7 vergrößert werden.

Dies kann z.B. durch eine Anlagensteuerung (nicht dargestellt) realisiert sein, in welcher die Menge des zu enthärtenden Wassers und dessen Ausgangshärtegrad abspeicherbar ist.

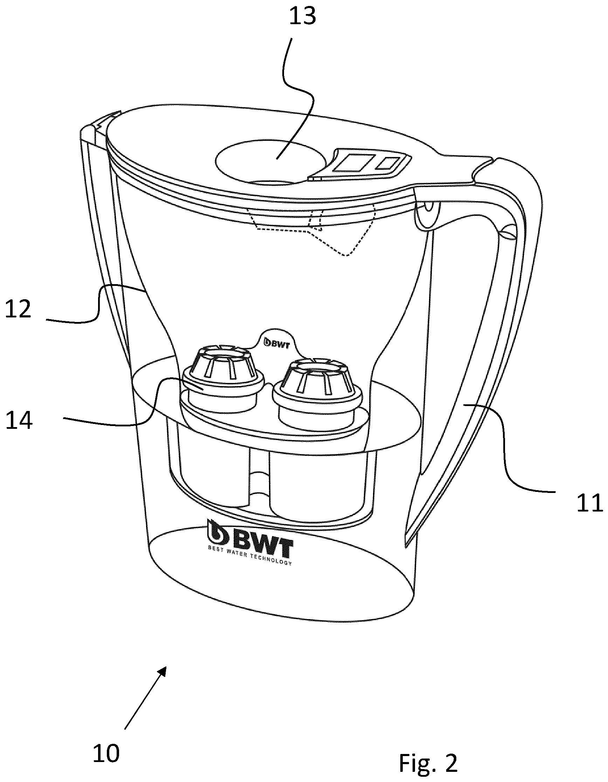

Fig. 2 ist eine schematische Ansicht eines Tischwasserfilters 10.

Der Tischwasserfilter 10 umfasst eine Kanne 11, in welcher ein Trichter 12 eingesetzt ist.

In den Trichter 12 ist wiederum eine Kartusche 14 eingesetzt, die mit einem Zeolithgranulat befüllt ist.

Über einen Einlauf 13 wird Wasser in den Trichter 12 eingefüllt.

Das Wasser durchläuft schwerkraftbetrieben die Kartusche 14 und sammelt sich in der Kanne 11.

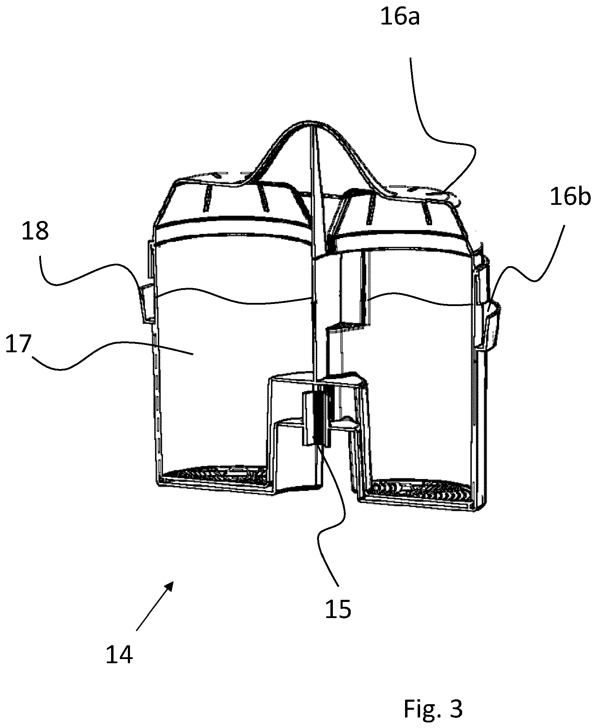

Fig. 3 ist eine Schnittansicht der Kartusche 14.

Die Kartusche 14 umfasst zumindest einen Einlauf, bei diesem Ausführungsbeispiel sind zwei unterschiedlich hohe Einläufe, nämlich die Einläufe 16a und 16b, vorhanden.

Weiter umfasst die Kartusche 14 einen Dichtrand 18, mittels dessen diese abgedichtet im Trichter sitzt.

Über den Einlauf 16a, 16b läuft das Wasser in die Kartusche 14, passiert das Filtermedium und tritt über einen Auslauf 15 aus.

Im Unterschied zu den in der Praxis meist verwendeten Filterkartuschen ist die Kartusche 14 nicht mit einem organischen Ionenaustauscherharz, sondern mit einem Zeolithgranulat 17 befüllt.

Das Filterbett ist frei von organischen Bestandteilen. Vorzugsweise ist die Kartusche 14 nur mit einem Zeolithgranulat 17 befüllt. Auf die Verwendung eines organischen Ionenaustauscherharzes und/oder Aktivkohle ist dagegen verzichtet.

Die Verwendung dieser Filterkartusche 14 hat den Vorteil, dass keine organischen Bestandteile an das Wasser abgegeben werden. Des Weiteren ist das Risiko einer Verkeimung deutlich geringer als bei organischen Ionenaustauscherharzen. So kann insbesondere auch gemäß einer Ausführungsform auf Aktivkohle verzichtet werden.

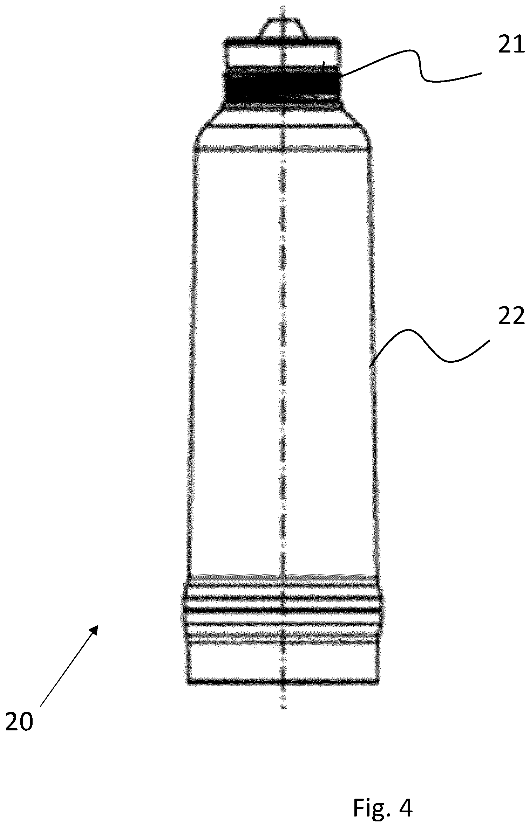

Fig. 4 zeigt eine Filterkerze 20, wie diese üblicherweise inline für eine an die Leitung angeschlossene Enthärtungsanlage, beispielsweise einen Tischwasserfilter, verwendet wird.

Die Filterkerze 20 umfasst einen Kopf mit einem Anschluss 21. Dieser kann beispielsweise ein Gewinde umfassen und umfasst Zulauf und Ablauf.

Das Gehäuse 22 der Filterkerze 20 ist erfindungsgemäß ebenfalls mit einem Zeolithgranulat befüllt.

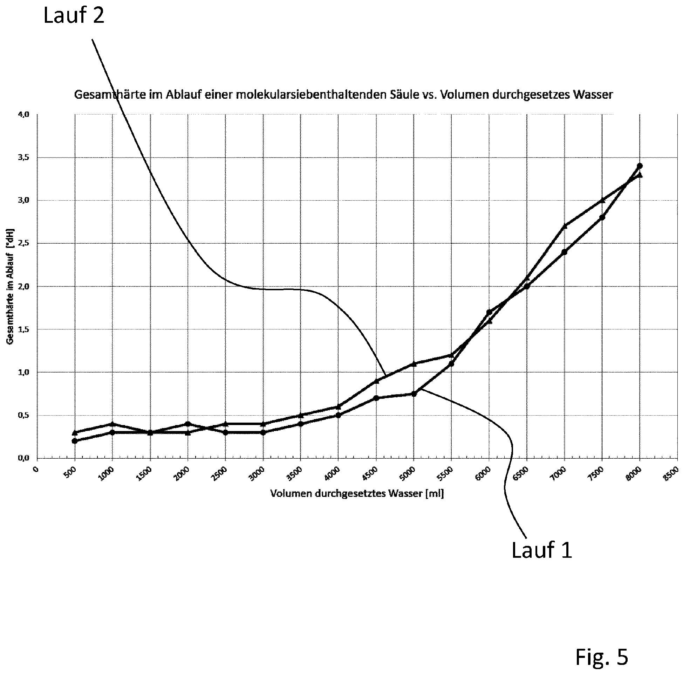

Fig. 5 zeigt ein Diagramm, in welchem die Gesamthärte des Ablaufs gemäß vorstehend beschriebenem Ausführungsbeispiel 2 aufgetragen ist.

Auf der x-Achse ist das durch das Molekularsieb geleitete Volumen und auf der y-Achse die Gesamthärte (°dH) des Ablaufs der molekularsiebenthaltenden Säule aufgetragen.

Zu erkennen ist insbesondere, dass auch nach einer Regeneration mit der Natriumchloridlösung die Kapazität nahezu dem ersten Lauf entspricht.

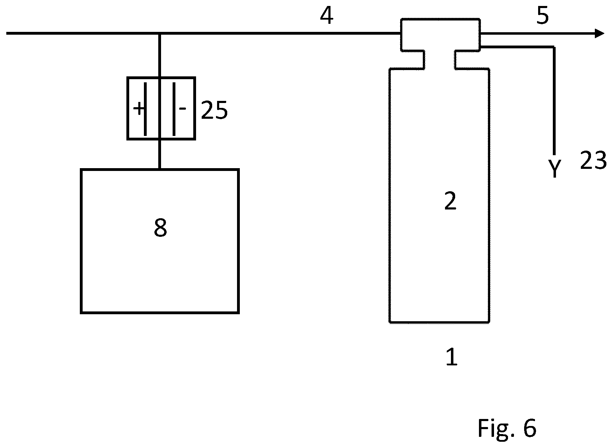

Bezugnehmend auf die schematischen Darstellungen gemäß Fig. 6 bis Fig. 8 sollen mögliche Abwandlungen eines Verfahrens zur Enthärtung eines Schwimmbeckens bzw. eines Schwimmbeckens, welches mit einer Enthärtungsanlage versehen ist, gegenüber Fig. 1 näher erläutert werden.

In den Zeichnungen sind nur die zusätzlichen bzw. gegenüber Fig. 1 abgewandelten Komponenten dargestellt.

In Fig. 6 befindet sich zwischen dem Salzlösebehälter 8 zur Regeneration des Molekularsiebs und dem Einlauf 4 zum Behälter 2 der Enthärtungsanlage 1 eine Elektrolyse-Anlage 25, mit welcher Chlor erzeugt werden kann.

Zumindest im Regenerationsbetrieb kann so zusammen mit dem Salzwasser Chlor in den Behälter 2 eingespült werden.

Das Molekularsieb kann so während der Regenerationsphase mit einer gegenüber dem Schwimmbeckenwasser höheren Chlorkonzentration desinfiziert werden.

Da das Zeolith durch das Chlor nicht angegriffen wird, können sehr hohe Chlorkonzentrationen verwendet werden.

Entsprechendes ist auch mit Ozon als Oxidationsmittel möglich.

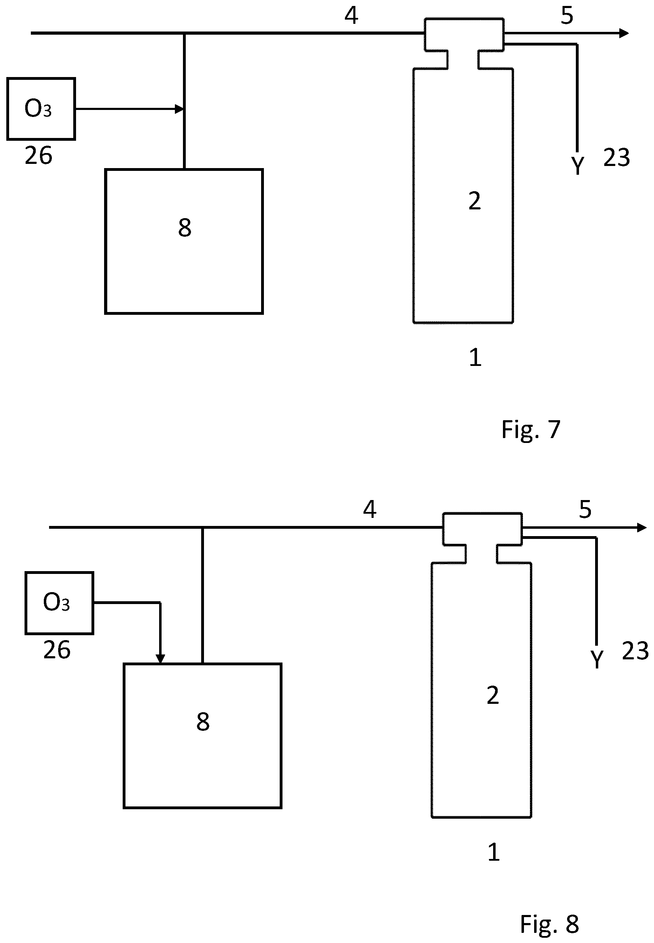

Wie in Fig. 7 dargestellt, kann Ozon aus einem Ozonerzeuger 26 ebenfalls während des Regenerationsbetriebs dem Einlauf 4 des Behälters 2 zugeführt werden.

Wie in Fig. 8 dargestellt, kann das Ozon aus dem Ozonerzeuger 26 auch in den Salzlösebehälter 8 eingeleitet, insbesondere eingesprudelt werden.

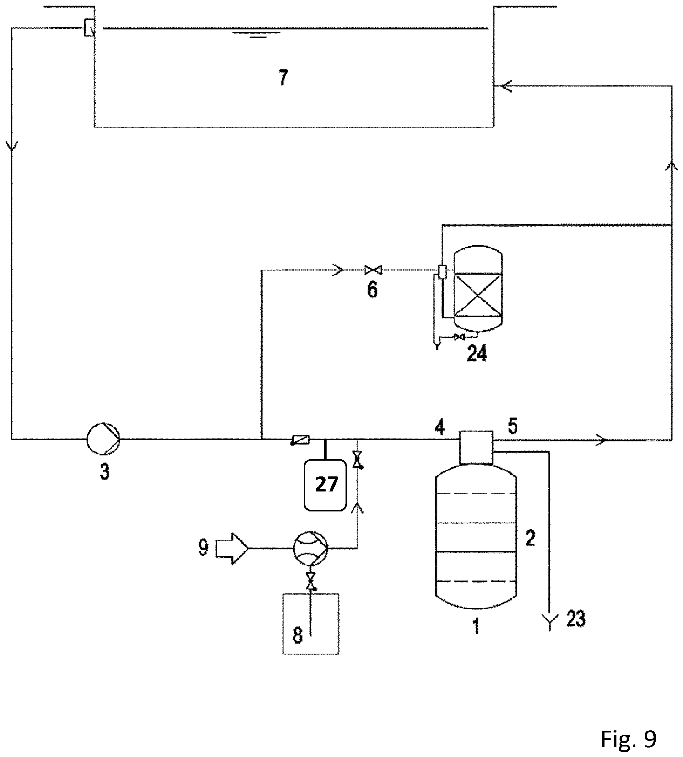

Es versteht sich, dass auch denkbar ist, während des regulären Betriebs Ozon oder Chlor z.B. über eine in Fig. 6 bis Fig. 8 nicht dargestellte Leitung derart zuzudosieren, dass dieses beispielsweise über den Auslauf 5 des Behälters 2 dem Schwimmbecken zugeführt wird (oder z.B. durch Platzierung einer Dosierpumpe für Chlor an anderer Stelle, siehe dazu auch Fig. 9).

Da bei dem in Fig. 1 dargestellten Ausführungsbeispiel das Wasser hinter dem Auslauf 5 mit Bypasswasser verschnitten wird, kann auch während des regulären Betriebs die Konzentration an Oxidationsmittel im Behälter 2 höher gehalten werden als im Schwimmbecken (7 in Fig. 1).

Bei Verwendung von Ozon als Oxidationsmittel können störende Gerüche auf jeden Fall vermieden werden.

Aber auch bei der Verwendung von Chlor während der Regeneration werden störende Gerüche zumindest deutlich reduziert.

Wie in Fig. 9 dargestellt, kann eine Chlorung 27 für das Schwimmbecken 7 vorhanden sein, welche z.B. eine Dosierpumpe umfasst, über die eine chlorhaltige Substanz zudosiert wird.

In dem in Fig. 9 dargestellten Ausführungsbeispiel erfolgt die Chlorung vor dem Einlauf 4 in den Behälter 2 mit dem Molekularsieb.

Die in Fig. 6 bis Fig. 8 dargestellte Desinfektion des Molekularsiebs durch Chlor oder Ozon kann bei dem in Fig. 9 dargestellten Ausführungsbeispiel ebenfalls vorhanden sein.

### Bezugszeichenliste

- 1: Enthärtungsanlage
- 2: Behälter
- 3: Pumpe
- 4: Einlauf
- 5: Auslauf
- 6: Bypass
- 7: Schwimmbecken
- 8: Salzlösebehälter zur Regeneration des Molekularsiebes
- 9: Speisewasser
- 10: Tischwasserfilter
- 11: Kanne
- 12: Trichter
- 13: Einfüllöffnung
- 14: Kartusche
- 15: Auslauf
- 16a,16b: Einlauf
- 17: Zeolithgranulat
- 18: Dichtrand
- 20: Filterkerze
- 21: Anschluss
- 22: Gehäuse
- 23: Ablauf
- 24: Filter
- 25: Elektrolyseanlage
- 26: Ozon-Erzeuger
- 27: Chlorung für Schwimmbecken

## Patentansprüche

1. Verwendung einer Kartusche oder Filterkerze in einer Vorrichtung, welche zur Durchführung eines Verfahrens zum Enthärten von Trinkwasser ausgebildet ist, wobei ein Tischwasserfilter oder eine Enthärtungsanlage verwendet wird, wobei das Trinkwasser über ein Molekularsieb geleitet wird,
wobei die Kartusche mit einem Zeolithgranulat befüllt ist, **dadurch gekennzeichnet, dass** dem Zeolithgranulat im Auslieferungszustand bezogen auf den Feststoffgehalt mehr als 10 Gewichts% Wasser zugegeben sind, so dass die Hitzeentwicklung aufgrund der Hydrationsenergie beim erstmaligen Verwenden des Zeolithgranulats derart reduziert wird, dass es nicht zu einer störenden Wärmeentwicklung kommt.

2. Verwendung nach dem vorstehenden Anspruch, **dadurch gekennzeichnet, dass** die Kartusche oder Filterkerze zu zumindest 30 %, vorzugsweise zu zumindest 60 % Ihres Volumens mit dem Zeolithgranulat befüllt ist.

3. Verwendung nach einem der vorstehenden Ansprüche, **dadurch gekennzeichnet, dass** sich die Kartusche oder Filterkerze in einer Aufreißverpackung befindet.

4. Verwendung nach einem der vorstehenden Ansprüche, **dadurch gekennzeichnet, dass** die Kartusche und/oder Filterkerze frei von organischen Ionenaustauschern ist, insbesondere, dass das Zeolithgranulat mit keinem weiteren Feststoff vermischt ist.

5. Verwendung nach Anspruch 1, **dadurch gekennzeichnet, dass** dem Zeolithgranulat weniger als 25 Gewichts%, bevorzugt weniger als 20 Gewichts% Wasser zugegeben wurde.

6. Verwendung nach Anspruch 1, **dadurch gekennzeichnet, dass** als Molekularsieb ein Zeolith verwendet wird, insbesondere ein Zeolith A und/oder Zeolith X.

7. Verwendung nach Anspruch 1, **dadurch gekennzeichnet, dass** ein Molekularsieb mit einer mittleren Porengröße von über 2 Ångström, bevorzugt über 3 Ångström und/oder unter 15 Ångström, bevorzugt unter 8 Ångström verwendet wird,
und/oder **dadurch gekennzeichnet, dass** als Molekularsieb ein Granulat verwendet wird, insbesondere mit einer mittleren Korngröße zwischen 0,2 mm und 5 mm.

## Claims

1. Use of a cartridge or filter candle in a device configured to carry out a method for softening drinking water, wherein a tabletop water filter or a water-softening system is used, wherein the drinking water is passed through a molecular sieve, wherein the cartridge is filled with a zeolite granulate;
**characterised in that**, in the delivery state, more than 10 wt% of water is added to the zeolite granulate relative to the solids content, such that the heat generation caused by the energy of hydration when the zeolite granulate is used for the first time is reduced to such an extent that no undesirable heat generation occurs.

2. Use according to the preceding claim, **characterised in that** the cartridge or filter candle is filled with the zeolite granulate to at least 30 %, preferably at least 60 %, of its volume.

3. Use according to any one of the preceding claims, **characterised in that** the cartridge or filter candle is contained in a tear-open package.

4. Use according to any one of the preceding claims, **characterised in that** the cartridge and/or filter candle is free of organic ion exchangers, in particular **in that** the zeolite granulate is not mixed with any further solid.

5. Use according to claim 1, **characterised in that** less than 25 wt%, preferably less than 20 wt%, of water has been added to the zeolite granulate.

6. Use according to claim 1, **characterised in that** a zeolite is used as the molecular sieve, in particular a zeolite A and/or a zeolite X.

7. Use according to claim 1, **characterised in that** a molecular sieve having an average pore size of more than 2 Ångström, preferably more than 3 Ångström, and/or less than 15 Ångström, preferably less than 8 Ångström, is used;
and/or **characterised in that** a granulate is used as the molecular sieve, in particular a granulate having an average particle size of between 0.2 mm and 5 mm.

## Revendications

1. Utilisation d'une cartouche ou d'une bougie filtrante dans un dispositif conçu pour mettre en œuvre un procédé d'adoucissement de l'eau potable, dans lequel on utilise un filtre à eau de table ou une installation d'adoucissement, l'eau potable étant amenée à traverser un tamis moléculaire,
la cartouche étant remplie d'un granulat de zéolite,
**caractérisée en ce que**, à l'état de livraison, plus de 10 % en poids d'eau, par rapport à la teneur en matières solides, sont ajoutés au granulat de zéolite, de sorte que le dégagement de chaleur dû à l'énergie d'hydratation lors de la première utilisation du granulat de zéolite est réduit à un point tel qu'aucun dégagement de chaleur gênant ne se produit.

2. Utilisation selon la revendication précédente, **caractérisée en ce que** la cartouche ou la bougie filtrante est remplie du granulat de zéolite à raison d'au moins 30 %, de préférence d'au moins 60 %, de son volume.

3. Utilisation selon l'une quelconque des revendications précédentes, **caractérisée en ce que** la cartouche ou la bougie filtrante se trouve dans un emballage à ouverture par déchirure.

4. Utilisation selon l'une quelconque des revendications précédentes, **caractérisée en ce que** la cartouche et/ou la bougie filtrante est exempte d'échangeurs d'ions organiques, en particulier **en ce que** le granulat de zéolite n'est mélangé à aucune autre matière solide.

5. Utilisation selon la revendication 1, **caractérisée en ce que** moins de 25 % en poids, de préférence moins de 20 % en poids, d'eau ont été ajoutés au granulat de zéolite.

6. Utilisation selon la revendication 1, **caractérisée en ce qu'**une zéolite est utilisée comme tamis moléculaire, en particulier une zéolite A et/ou une zéolite X.

7. Utilisation selon la revendication 1, **caractérisée en ce qu'**un tamis moléculaire présentant une taille moyenne de pores supérieure à 2 ångströms, de préférence supérieure à 3 ångströms, et/ou inférieure à 15 ångströms, de préférence inférieure à 8 ångströms, est utilisé,
et/ou **caractérisée en ce qu'**un granulat est utilisé comme tamis moléculaire, en particulier un granulat présentant une taille moyenne des particules comprise entre 0,2 mm et 5 mm.
